# EUROPEAN PATENT SPECIFICATION

(11) **EP 1 877 765 B1**
(45) Date of publication and mention of the grant of the patent: **25.01.2017**
(21) Application number: 06769908.2
(22) Date of filing: 27.04.2006
(51) Int. Cl.: G01N 27/447

(54) **METHOD FOR ELECTROPHORESIS USING MEDIA OF DIFFERING PROPERTIES**
ELEKTROPHORESEVERFAHREN UNTER VERWENDUNG VON MEDIEN MIT UNTERSCHIEDLICHEN EIGENSCHAFTEN
PROCÉDÉ D'ÉLECTROPHORÈSE UTILISANT DES MILIEUX À PROPRIÉTÉS DIFFÉRENTES

(30) Priority: 29.04.2005 DE 102005020135
(43) Date of publication of application: 16.01.2008
(73) Proprietor: Becton Dickinson and Company, Franklin Lakes, NJ 07417-1880 (US)
(72) Inventor: WEBER, Gerhard, 85551 Kirchheim (DE)
(74) Representative: Eder, Michael
(86) International application number: PCT/US2006/016190
(87) International publication number: WO 2006/119001

(56) References cited:
- US-A- 4 309 268
- US-A- 5 336 387
- US-A1- 2004 050 697
- US-B1- 6 328 868
- US-B1- 6 638 408

## Description

### Background of the Invention

### Field of the Invention

The invention relates to a method for continuous, carrier-free deflection electrophoresis involving counterflow media.

### Description of Related Art

Since the principle of the method known as free-flow electrophoresis (FFE) was described in DE 805 399, Barrolier, J. et al. in Z. Naturforschung, 1958, 13B, pages 754 to 755, Hannig, K. in Zeitschrift der Analytischen Chemie, 1961, 181, pages 244 to 254 and Roman, M. et al. in Journal of Chromatography 1992, 592, pages 3 to 12 this technique has found a permanent position among efficient analytical and preparative methods used in industry and chemistry. Although both small ions as well as large particles can be separated using this technique, a major application is the fractionation of proteins, especially in the biotechnological production of enzymes and other biologically active proteins, membrane particles and even viable cells. In comparison to other methods enabling isolation of separated sample components, FFE offers two main advantages: (i) the separation may be performed continuously and enables one to obtain as much as hundreds of milligrams or even gram amounts of pure substances per hour and (ii) the separation is gentle and preserves enzymatic activity of the separated components. The technology of FFE is particularly useful in the separation and fractionation of complex proteins, and is thus applicable to the emergent field of proteomics, which is growing increasingly important in the academic research, pharmaceutical, biotechnology and clinical diagnostic markets. For example, as proteomic research has grown, there has been an increased demand in the improvement of protein separation performance, especially relative to resolution process reliability, and a universal front-end.

Generally, free-flow separation methods are suitable for separating ions of any molecular weight as well as bioparticles. It generally does not matter whether the sample to be separated is itself electrically charged or whether the charge is generated by the adsorption or sorption of ions. The process of continuous deflection electrophoresis and its improvement by way of stabilization media and counterflow media is reflected, for example , in United States Patent 5,275,706. According to this patent, the counterflow medium is introduced into the separation space counter to the flow direction of the separation medium. Both media are discharged through fractionation outlets, resulting in a fractionation having a low void volume and, additionally, maintaining a laminar flow of the media in the region of the fractionation outlets, e.g., with very low turbulence. A discussion of various modes of free flow electrophoresis can be found, for example, in U.S. patent application 2004/0050697.

Isoelectric focusing is an electrophoretic technique that adds a ph-gradient two the buffer solution and together with the electric field focuses most biological materials that are amphoteric. Amphoteric biomaterials such as proteins, peptides, and, viruses, are positively charged in acidic media and negatively charged in basic media. During IEF, these materials migrate in the pH-gradient that is established across, i.e., transverse to the flow-direction, to their isoelectric point (pI) where they have no net charge and form stable, narrow zones. At this point the materials stop migrating transversely and they become focused. In this technique, there is no voltage dependence. Isoelectric focusing yields such high resolution bands because any amphoteric biomaterial which moves away from its isoelectric point due to diffusion or fluid movement will be returned by the combined action of the pH gradient and electric field. The focusing process thus purifies and concentrates the samples into bands that are relatively stable. This is a powerful concept that has yielded some of the highest resolution separations, especially when coupled with electrophoresis in two-dimensional gels. In IEF, however, the rate of electrophoretic migration of each charged species tends to decrease progressively as it approaches its isoelectric point and long residence times are therefore typically required for high resolution. Moreover, proteins have reduced solubility and a loss of biological activity at their isoelectric point.

One proposed solution to these challenges is reflected in United States Patent 6,660,146. The patent discloses an apparatus and method involving opposing the electrophoretic sample velocity with a uniform fluid-flow transverse to the direction of carrier flow through the chamber. This is achieved by using a combination of electrode arrays and insulated screens to provide the electric field gradient and uniform transverse flow necessary for focusing. This approach does not appear to be practical however.

Zone electrophoresis is another separation mode that can be used in FFE. Zone electrophoresis separates bioparticles primarily based on charge, and to a lesser extent form and size. A further mode than can be used in FFE is isotachophoresis (ITP). ITP FFE involves use of a non-homogeneous separation media. When components separate from the main band of the initial sample, the components enter an area when they are accelerated or decelerated transverse to the bulk sample flow, based on the local conditions. This so-called focusing effect is then used to fractionate the desired components from the bulk sample.

Other methods for improved separation are desired.

### Summary of the Invention

The invention provides, among other things, methods for improved separation, including improvement to some typical problems found in IEF processes.

In one embodiment, the invention provides a method comprising the steps of:
(a) providing a separation chamber comprising a first end wall, a second end wall, a first sidewall, a second side wall, and two plates, wherein the end walls, sidewalls and plates define a separation space; a first electrode and a second electrode located in the separation chamber in proximity to the first sidewall and the second sidewall, respectively; at least one sample inlet located in proximity to the first end wall; at least one separation medium inlet located in proximity to the first end wall; a plurality of collection outlets located in proximity to the second end wall; and a plurality of counterflow inlets located in proximity to the second end wall;
(b) generating an electric field in the chamber via the first and second electrodes;
(c) introducing a separation medium through the at least one separation medium inlet into the separation chamber;
(d) introducing a sample to be separated through the at least one sample inlet into the separation chamber;
(e) introducing one or more counterflow media through the plurality of counterflow medium inlets into the separation chamber, wherein at least two of the counterflow medium inlets have introduced therethrough counterflow media of differing properties; and
(f) collecting separated portions of the sample through the plurality of collection outlets.

(One or more of the introducing and generating steps may be performed simultaneously, or in a different order than as presented above.)

The differing properties of the counterflow media can be, for example, difference in chemical properties of the compounds, difference in physical properties of the compounds, or difference in flow properties, e.g., linear flow velocity in the proximity of the , of a single compound. This individual control among inlets is able to, for example, alter conditions near collection outlets to better maintain biological activity and solubility, during the relatively long residence times sometimes required in electrophoretic processes.

### Brief Description of the Drawings

Fig. 1 is a schematic view of a conventional FFE-separation chamber according to the prior art.
Fig. 2 is a schematic view of a separation chamber suitable for the method of the invention.
Fig. 3A demonstrates the methodology according to an embodiment of the invention using counterflow media of different properties.
Fig. 3B demonstrates the methodology according to an embodiment of the invention in which the flow rate of the counterflow medium differs.
Fig. 3C demonstrates the methodology according to an embodiment of the invention in which the flow rate of the counterflow medium differs.

### Detailed Description

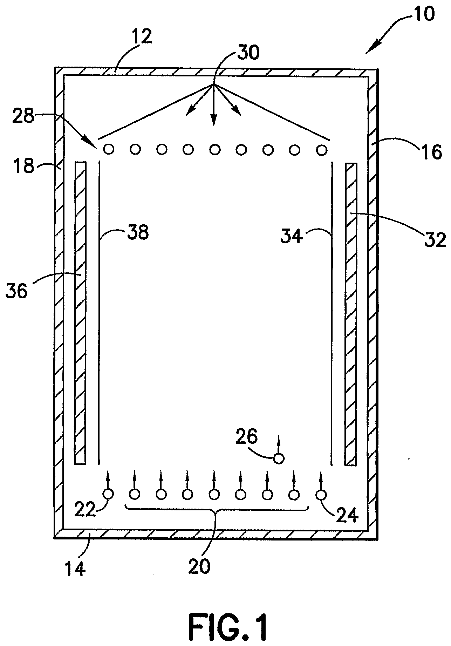

Figure 1 is a schematic view of a separation chamber 1 according to the prior art which, in proximity to its lower end wall 14 has, as an example, nine inlets 20, 22, 24, typically having ports (not shown) which are connected by tubes, such as flexible tubes, to the feed channels of a multi-channel pump, such as a peristaltic pump. Inlets 20 are supplied with the separation medium. Inlets 22 and 24 are supplied with the electrodic stabilization medium for the anode 36 and cathode 32, respectively. The sample containing the analytes is injected into the separation space through sample inlet 26. All media flow through the separation space under laminar flow conditions. (The direction of flow from the various inlets is shown by arrows.) The electrodes 32 and 36 are arranged in parallel on both sides of the separation chamber, proximate the side walls 16 and 18 to generate an electric field, and are typically purged in a circular flow at a high flow rate using a pump. Membranes 34 and 38, which are electrically conductive, separate the electrode space from the separation space and inhibit any exchange of media caused by hydro-dynamic flow. A counterflow medium is introduced into the separation chamber through counterflow element 30. The counterflow enhances separation by allowing adjustment and control of the flow and pressure conditions at the collection outlets 28.

As the sample flows through the chamber, the field created by the electrodes induces separation of components within the sample. The separated sample, e.g., analytes of interest, are collected through collection outlets 28 that are arranged along a line, generally in proximity to and parallel to the separation chamber upper or exit wall 12. The selected sample component collected is generally led through tubing to a collection vessel and may be used for analytic or preparative purposes. Suitable collection vessels are, for instance, micro-titer wells. Extraneous sample components that are not collected through the collection outlets through which the desired sample is withdrawn or which are collected through different collection outlets can be discarded.

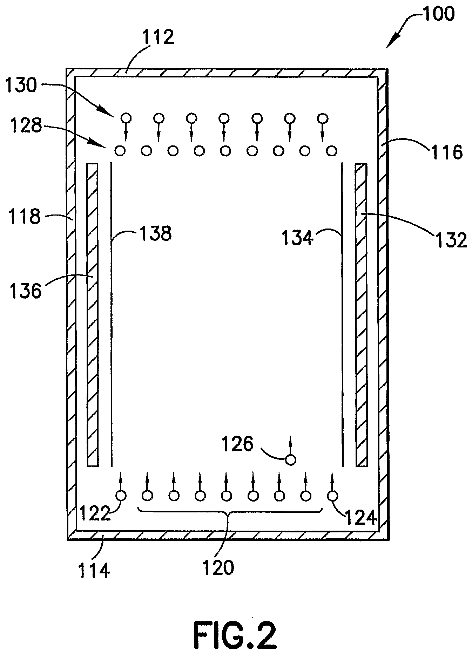

One embodiment of the invention, reflected in Fig. 2, is a method for continuous, carrier-free deflection electrophoresis. The method is performed in a device 100 comprising a rectangular separation chamber having a first (lower) wall 114 and a second (upper) wall 112, two sidewalls 116 and 118, and two superimposed parallel flat plates (not shown). Together, these elements form the sealed separation chamber. Two electrodes 132 and 136 capable of and designed for generating a high-voltage electric field are located in the chamber and help define a separation space. The separation chamber, at or near (i.e., in proximity to) the first end, contains at least one sample inlet 126 for the injection of the sample and at least one separation medium inlet 120 for injection of the separation medium. (Note that in the case of multiple inlets 120, more than one separation medium can be provided.) In proximity to the second end is located a plurality of sample collection outlets 128 and a plurality of counterflow media inlets 130. Both the collection outlets and the counterflow media inlets are typically arranged along a line perpendicular to the flow direction.

The individual analytes exit the separation chamber through the multiple collection outlets 128 and are generally led through individual tubing to individual collection vessels of any suitable type. In the collection vessels, the analyte is collected together with the separation medium and counterflow medium. The distance between the individual collection outlets 128 of the array of collection outlets should generally be as small as possible in order to provide for a suitable fractionation/separation. The distance between individual collection outlets, measured from the centers of the collection outlets, can be from about 0.1 mm to about 2 mm, more typically from about 0.3 mm to about 1.5 mm.

At least two of the counterflow medium inlets 130 have counterflow media of at least two different properties introduced therein. Flow is in the direction shown, which is counter to the flow of the separation medium from inlets 120.

In various embodiments, the number of separation medium inlets 120 ranges from 1 to 9, or from 1 to 7; the number of sample inlets 126 ranges from 1 to 5, or from 1 to 3, the number of collection outlets 128 ranges from 3 to 384, or from 3 to 96; and the number of counterflow media inlets 130 ranges from 2 to 9, or from 3 to 7. The number of provided inlets and outlets generally depends from the dimensions of the separation device.

According to one embodiment, a separation chamber 100 contains separation medium inlet 120, three sample inlets 126 for the injection of the sample, three to ninety-six collection outlets 128 and seven counterflow media inlets 130.

According to embodiments of the invention, the method can be combined with variations of free flow electrophoresis processes and devices. For example, multiple devices can be used, which are then arranged in parallel and/or in series. Alternatively, the component flow collected at the collection outlets of a device may be recycled back to the corresponding sample inlets to form a recycling process which can improve resolution by increasing sample component residence time. In addition, different FFE modes are possible, for example IEF and Zone.

In the case of IEF, it is useful to select media with specific pH values, to facilitate separation of the component of interest. Generally, the pH values are selected based on the isoelectric point of the component or components of interest, to ensure the component(s) are properly separated. The counterflow media is typically selected to be capable of modifying or surpassing the buffering capacity of the separation medium approaching the fractionation outlets, and may therefore be a material having the same viscosity and density but differing in conductivity and/or pH-value and/or their chemical ingredients. In one embodiment, the pH value of the counterflow medium or media is/are greater than the pH value of the separation medium or media.

Typical counterflow and separation media are selected from the same group of media, and typically contain components such as urea, glycerol, carbohydrates glucose, and similar compounds. Such media are commercially available from several sources, e.g., Immobiline,™ Ampholine™ and Pharmalyte™ from General Electric, Servalyt™ from SERVA Electrophoresis GmbH, and similar materials from Becton, Dickinson and Company.

According to embodiments of the invention, the counterflow media that are introduced into the counterflow medium inlets 130 are not of the same properties through the entire array of counterflow medium inlets but differ from inlet to inlet and/or between group of inlets in their properties, e.g., media having differing chemical and/or physical properties and/or media of different flow characteristics. When varying the counterflow media between groups of inlets, a group that forms a segment of identical properties is, in one embodiment two to nine individual inlets, or three to about seven inlets in another embodiment. For example, a counterflow medium (A) is injected through a first counterflow medium segment (inlets 1 to 10), a second counterflow medium (B), of different flow characteristics or different chemical and/or physical properties compared to medium (A), is injected through a second segment (inlets 11 to 20), and a third counterflow medium (C) of different properties from medium (B) is injected through a third segment (inlets 21 to 30).

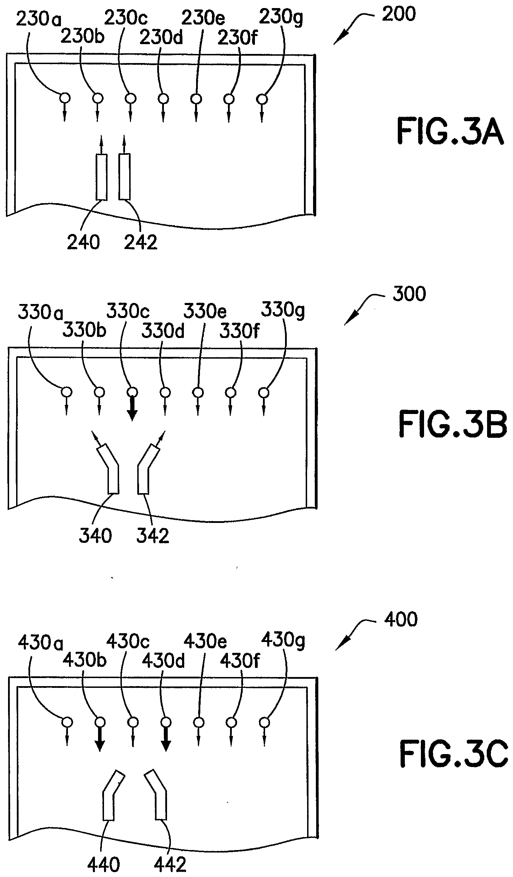

Chemical and physical distinctions include, but are not limited to, differences in pH-value, viscosity, or conductivity. An example where such differing counterflow media are used is reflected in Figure 3A. In Figure 3A, a chamber 200 is provided with multiple counterflow inlets 230a to 230g, and inlets 230a through 230c are provided with a first medium, while inlets 230d through 230g are provided with a different medium. The counterflow media, noted above, are selected to enhance solubility and preserve biological activity. Thus, for example, based on the analytes present in the adjacent sample paths 240 and 242, the counterflow media are chosen to modify the pH and/or conductivity of the separation medium, on a local scale, in order to achieve the solubility and biological activity improvements. (For clarity, no other elements of the chamber 200 are shown. This is also the case in Figures 3B and 3C.)

Differences in other properties, but where there exist no chemical or physical distinctions in the counterflow medium may include flow rate. For example, according to embodiments of the invention, the linear flow rate of the individual counterflow media introduced through the individual counterflow inlets is different. This results in differing flow profiles in the region of the collection outlets which can, in some cases, cause an increase of the geometrical distances between adjacent flow paths of separated analytes or, in other cases, a decrease of the geometrical distances between adjacent paths of analytes.

An example of increased geometrical distances between adjacent paths of separated analytes is shown in Figure 3B. In this embodiment, a single counterflow medium is provided to inlets 330a to 330g. However, the flow rate from inlet 330c is higher than the other inlets. This increased flow rate causes increased spacing between adjacent paths 340 and 342 of separated components of the sample. This approach may be useful, for example, in cases where the analyte of interest tends to be spaced closely with other components, and collection of a pure sample is therefore difficult.

An example of decreased geometrical distances between adjacent paths of separated analytes is shown in Figure 3C. In this embodiment, a single counterflow medium is provided to inlets 430a to 430g. However, the linear flow rate from inlets 430b and 430d is higher than the linear flow rate from inlet 430c located between them. This increased flow rate around inlet 430c causes a reduction in the spacing between adjacent paths 440 and 442 of separated components of the sample. This approach may be useful, for example, in cases where an analyte or analytes of interest tend to be spaced somewhat widely, and it is desired to focus the wide band or bands toward a single or a few collection outlets, or where certain components precipitate and it is desired to collect such precipitates in one area.

In case of different linear flow rates of counterflow media introduced through different counterflow media inlets or groups of inlets, the ratio of the flow rate of such an inlet or group of inlets relative to an adjacent inlet or a group of inlets typically is about 5:1 or less, or 3:1 or less.

It is also possible to control flow using both counterflow media having differing chemical and/or physical properties, and differences in flow rates of those differing media.

A useful ratio of the flow-rate of the separation medium to the flow rate of the counterflow medium is about 1:10 to about 10:1, more typically about 1:3 to about 3:1. The actual flow rates for the separation medium and the counterflow media depend on a variety of considerations, including the geometrical dimensions of the instrument, the particular separation mode used (which may vary the required transit time), the sample to be separated, the separation medium used and the counterflow medium or media used in order to obtain an optimum separation of the analytes. Typical flow rates of all media into the system (stabilization and counterflow) may therefore range widely from 0.3 mL/hour to 3000 mL/hour.

An apparatus according to embodiments of the invention further contains a multi-channel pump for the separation medium, a multi-channel pump for the sample, and a multi-channel pump for the counterflow medium/media. The device further contains a fraction collector outlet and outlet tubes. Typically, the pumps are multi-channel peristaltic pumps.

The bottom plate and the upper plate of the separation chamber can independently be made of glass, or suitable plastics, such as PVC, polyolefins, polycarbonate, plexiglass, polyhalohydrocarbons, or Lucite® (an acrylic resin consisting essentially of polymerized methyl methacrylate), with polymer coated glass being preferred. The top and bottom plates are typically separated by spacers that act as gaskets or seals.

The electrodes are typically composed of a metal such as platinum that will not easily be oxidized in the electric field. The electrodes are typically separated from the separation chamber by ion-exchange, nylon or cellulose acetate membranes. The electrodes are typically washed constantly by a salt or buffer solution to remove electrolysis products that are created during the process.

The separation space (space between plates) usually has a thickness of about 0.1 to about 1.5 mm, preferably between about 0.3 and about 1.0 mm.

Temperature control is also useful according to embodiments of the invention. When current passes through an electrolyte solution, the temperature of the conduction medium increases, according to the phenomenon known as Joule heating. To reduce disturbances to the laminar flow profile of the flowing medium caused by such heating, it is generally desirable to dissipate the Joule heat to the surroundings. In one embodiment, the separation chamber is arranged with its bottom plate on a metal support that contains fluid flow channels connected to a temperature control device, such as a thermostat system for controlling the temperature of the separating chamber. Useful temperature ranges are about 2 °C and about 35 °C, more typically about 5°C to room temperature (about 25 °C).

The invention is particularly suitable for, but not limited to, the analysis and preparative separation of ions, peptides, biopolymers, bioparticles as well as synthetic polymers and particles.

The above descriptive embodiments are only exemplary of the present invention, and there are numerous modifications and alternative modes that would fall within the scope of the invention, which is set forth in the claims appended hereto.

## Claims

1. A method for electrophoresis, the method comprising the steps of
(a) providing a separation chamber comprising a first end wall (114), a second end wall (112), a first sidewall (116), a second side wall (118), and two plates, wherein the end walls (114, 116), sidewalls (116, 118) and plates define a separation space; a first electrode (132) and a second electrode (136) located in the separation chamber in proximity to the first sidewall (116) and the second sidewall (118), respectively; at least one sample inlet (126) located in proximity to the first end wall (114); at least one separation medium inlet (120) located in proximity to the first end wall (114); a plurality of collection outlets (128) located in proximity to the second end wall (112); and a plurality of counterflow inlets (130) located in proximity to the second end wall (112);
(b) generating an electric field in the chamber via the first and second electrodes (132, 136);
(c) introducing a separation medium through the at least one separation medium inlet (120) into the separation chamber;
(d) introducing a sample to be separated through the at least one sample inlet (126) into the separation chamber;
(e) introducing, with a flow counter to the flow of the separation medium, one or more counterflow media through the plurality of counterflow medium inlets (130) into the separation chamber, wherein at least two of the counterflow medium inlets (130) have introduced therethrough counterflow media of differing properties; and
(f) collecting separated portions of the sample through the plurality of collection outlets (128).

2. The method according to claim 1, wherein the flat plates are superimposed and arranged in parallel, and wherein the counterflow medium inlets (130) are arranged along a line perpendicular to the direction of flow of the separation medium.

3. The method according to claim 1 or claim 2, wherein at least two counterflow media are introduced, the at least two counterflow media being distinct in their chemical properties, physical properties, or both chemical and physical properties.

4. The method according to claim 3, wherein the at least two counterflow media are distinct in one or more properties selected from the group consisting of pH, viscosity and conductivity.

5. The method according to any one of claims 1 to 4, wherein a plurality of counterflow media or a single counterflow medium is introduced through the plurality of counterflow inlets (130) at two or more different linear flow rates.

6. The method according to claim 5, wherein a single counterflow medium is introduced through the plurality of counterflow inlets (130) at two or more different linear flow rates.

7. The method according to claim 5, wherein the ratio of the linear flow rate of a first counterflow medium through a first inlet or first group of inlets, to the linear flow rate of a second counterflow medium through a second adjacent inlet or adjacent second group of inlets is about 5 : 1 or less, wherein the first and second counterflow medium may be the same or different.

8. The method according to any one of claims 5 to 7, wherein the flow rates are selected to provide an increase in distance between at least two adjacent paths of separated portions of the sample.

9. The method according to any one of claims 5 to 7, wherein the flow rates are selected to provide a decrease in distance between at least two adjacent paths of separated portions of the sample.

10. The method according to any one of claims 1 to 9, wherein the ratio of the flow rate of the counterflow medium to the flow rate of the separation medium is between about 1:10 and about 10:1.

11. The method according to any one of claims 1 to 10, wherein the number of separation medium inlets is from 1 to 9, the number of counterflow medium inlets is from 2 to 9, the number of collection outlets is from 3 to 384, and the number of sample inlets is from 1 to 5.

12. The method according to any one of claims 1 to 11, wherein the separation chamber further comprises first and second electrically conductive membranes (134, 138) adjacent to the first and second electrodes, respectively.

13. The method according to any one of claims 1 to 12, wherein the plurality of collection outlets are arranged along a line perpendicular to the direction of flow of the separation medium, and wherein the distance between adjacent collection outlets is about 0.1 mm to about 2 mm.

14. The method according to any one of claims 1 to 13, wherein the pH value of the counterflow media is greater than the pH value of the separation medium.

15. The method according to any one of claims 1 to 14, wherein the counterflow medium or media contain one or more components selected from the group consisting of urea, glycerol, carbohydrates, and glucose.

16. The method according to any one of claims 1 to 15, wherein the separation space between the first and second plates comprises a thickness of about 0.1 to about 1.5 mm.

17. The method according to any one of claims 1 to 16, further comprising the step of regulating the temperature of the separation chamber to maintain a temperature from about 2°C to about 35°C.

## Patentansprüche

1. Elektrophorese-Verfahren, wobei das Verfahren die folgenden Schritte umfasst
(a) Bereitstellung einer Trennkammer, umfassend eine erste Stirnwand (114), eine zweite Stirnwand (112), eine erste Seitenwand (116), eine zweite Seitenwand (118) und zwei Platten, wobei die Stirnwände (114, 112), Seitenwände (116, 118) und Platten einen Trennraum definieren; eine erste Elektrode (132) und eine zweite Elektrode (136), die sich in der Trennkammer in der Nähe der ersten Seitenwand (116) bzw. der zweiten Seitenwand (118) befinden; mindestens einen in der Nähe der ersten Stirnwand (114) befindlichen Probeneinlass (126); mindestens einen in der Nähe der ersten Stirnwand (114) befindlichen Trennmediumeinlass (120); eine Vielzahl von in der Nähe der zweiten Stirnwand (112) befindlichen Sammelauslässen (128) und eine Vielzahl von in der Nähe der zweiten Stirnwand (112) befindlichen Gegenstromeinlässen (130);
(b) Erzeugen eines elektrischen Felds in der Kammer mittels der ersten und zweiten Elektrode (132, 136);
(c) Einbringen eines Trennmediums durch den mindestens einen Trennmediumeinlass (120) in die Trennkammer;
(d) Einbringen einer zu trennenden Probe über den mindestens einen Probeneinlass (126) in die Trennkammer;
(e) Einbringen, in einer Flussrichtung entgegen der Flussrichtung des Trennmediums, eines oder mehrerer Gegenstrommedien durch die Vielzahl von Gegenstrommediumeinlässen (130) in die Trennkammer, wobei in mindestens zwei der Gegenstrommediumeinlässe (130) Gegenstrommedien mit unterschiedlichen Eigenschaften hineingebracht werden, und
(f) Sammeln getrennter Anteile der Probe durch die Vielzahl von Sammelauslässen (128).

2. Verfahren nach Anspruch 1, wobei die flachen Platten übereinander und parallel angeordnet sind, und wobei die Gegenstrommediumeinlässe (130) entlang einer Linie senkrecht zur Strömungsrichtung des Trennmediums angeordnet sind.

3. Verfahren nach Anspruch 1 oder Anspruch 2, wobei mindestens zwei Gegenstrommedien eingebracht werden, wobei die mindestens zwei Gegenstrommedien sich in ihren chemischen Eigenschaften, ihren physikalischen Eigenschaften oder sowohl in ihren chemischen als auch den physikalischen Eigenschaften unterscheiden.

4. Verfahren nach Anspruch 3, wobei die mindestens zwei Gegenstrommedien sich in einer oder mehreren Eigenschaften, ausgewählt aus der Gruppe bestehend aus pH-Wert, Viskosität und Leitfähigkeit unterscheiden.

5. Verfahren nach einem der Ansprüche 1 bis 4, wobei eine Vielzahl von Gegenstrommedien oder ein einzelnes Gegenstrommedium durch die Vielzahl von Gegenstromeinlässen (130) mit zwei oder mehreren unterschiedlichen linearen Strömungsgeschwindigkeiten eingebracht werden.

6. Verfahren nach Anspruch 5, wobei ein einzelnes Gegenstrommedium durch die Vielzahl von Gegenstromeinlässen (130) mit zwei oder mehreren unterschiedlichen linearen Strömungsgeschwindigkeiten eingebracht wird.

7. Verfahren nach Anspruch 5, wobei das Verhältnis der linearen Strömungsgeschwindigkeit eines ersten Gegenstrommediums durch einen ersten Einlass oder eine erste Gruppe von Einlässen zu der linearen Strömungsgeschwindigkeit eines zweiten Gegenstrommediums durch einen zweiten angrenzenden Einlass oder eine zweite angrenzende Gruppe von Einlässen ungefähr 5:1 oder weniger beträgt, wobei das erste und zweite Gegenstrommedium gleich oder verschieden sein können.

8. Verfahren nach einem der Ansprüche 5 bis 7, wobei die Strömungsgeschwindigkeiten so ausgewählt werden, dass sie eine Abstandsvergrößerung zwischen mindestens zwei angrenzenden Bahnen von getrennten Anteilen der Probe bereitstellen.

9. Verfahren nach einem der Ansprüche 5 bis 7, wobei die Strömungsgeschwindigkeiten so ausgewählt werden, dass sie eine Abstandsverringerung zwischen mindestens zwei angrenzenden Bahnen von getrennten Anteilen der Probe bereitstellen.

10. Verfahren nach einem der Ansprüche 1 bis 9, wobei das Verhältnis der Strömungsgeschwindigkeit des Gegenstrommediums zur Strömungsgeschwindigkeit des Trennmediums zwischen ungefähr 1:10 und ungefähr 10:1 beträgt.

11. Verfahren nach einem der Ansprüche 1 bis 10, wobei die Zahl der Trennmediumeinlässe von 1 bis 9 beträgt, die Zahl der Gegenstrommediumeinlässe von 2 bis 9 beträgt, die Zahl der Sammelauslässe von 3 bis 384 und die Zahl der Probeneinlässe von 1 bis 5 beträgt.

12. Verfahren nach einem der Ansprüche 1 bis 11, wobei die Trennkammer ferner erste und zweite elektrisch leitfähige Membranen (134, 138) angrenzend an die erste bzw. zweite Elektrode umfasst.

13. Verfahren nach einem der Ansprüche 1 bis 12, wobei die Vielzahl von Sammelauslässen entlang einer Linie senkrecht zur Strömungsrichtung des Trennmediums angeordnet sind, und wobei der Abstand zwischen angrenzenden Sammelauslässen ungefähr 0,1 mm bis ungefähr 2 mm beträgt.

14. Verfahren nach einem der Ansprüche 1 bis 13, wobei der pH-Wert der Gegenstrommedien größer ist als der pH-Wert des Trennmediums.

15. Verfahren nach einem der Ansprüche 1 bis 14, wobei das Gegenstrommedium bzw. die Gegenstrommedien eine oder mehrere Komponenten, ausgewählt aus der Gruppe bestehend aus Harnstoff, Glycerol, Kohlenhydraten und Glucose enthalten.

16. Verfahren nach einem der Ansprüche 1 bis 15, wobei der Trennraum zwischen der ersten und zweiten Platte eine Dicke von ungefähr 0,1 bis ungefähr 1,5 mm aufweist.

17. Verfahren nach einem der Ansprüche 1 bis 16, ferner umfassend den Schritt der Regulierung der Temperatur der Trennkammer, um eine Temperatur von ungefähr 2 °C bis ungefähr 35 °C beizubehalten.

## Revendications

1. Procédé d'électrophorèse, le procédé comprenant les étapes consistant à :
(a) fournir une chambre de séparation comprenant une première paroi d'extrémité (114), une seconde paroi d'extrémité (112), une première paroi latérale (116), une seconde paroi latérale (118) et deux plaques, dans lequel les parois d'extrémité (114, 116), les parois latérales (116, 118) et les plaques définissent un espace de séparation ; une première électrode (132) et une seconde électrode (136) situées dans la chambre de séparation à proximité de la première paroi latérale (116) et de la seconde paroi latérale (118), respectivement ; au moins une entrée d'échantillon (126) située à proximité de la première paroi d'extrémité (114) ; au moins une entrée de fluide de séparation (120) située à proximité de la première paroi d'extrémité (114) ; une pluralité de sorties de collecte (128) situées à proximité de la seconde paroi d'extrémité (112) ; et une pluralité d'entrées de contre-courant (130) situées à proximité de la seconde paroi d'extrémité (112) ;
(b) générer un champ électrique dans la chambre par l'intermédiaire des première et seconde électrodes (132, 136) ;
(c) introduire un fluide de séparation à travers l'au moins une entrée de fluide de séparation (120) dans la chambre de séparation ;
(d) introduire un échantillon à séparer à travers l'au moins une entrée d'échantillon (126) dans la chambre de séparation ;
(e) introduire, en sens inverse d'écoulement du fluide de séparation, un ou plusieurs fluides de contre-courant à travers la pluralité d'entrées de fluide de contre-courant (130) dans la chambre de séparation, où au moins deux des entrées de fluides de contre-courant (130) ont introduit, à travers elles, des fluides de contre-courant de propriétés différentes ; et
(f) collecter des parties séparées de l'échantillon à travers la pluralité de sorties de collecte (128).

2. Procédé selon la revendication 1, dans lequel les plaques plates sont superposées et disposées en parallèle et dans lequel les entrées de fluide de contre-courant (130) sont disposées le long d'une ligne perpendiculaire à la direction d'écoulement du fluide de séparation.

3. Procédé selon la revendication 1 ou la revendication 2, dans lequel au moins deux fluides de contre-courant sont introduits, les au moins deux fluides de contre-courant étant distincts dans leurs propriétés chimiques, leurs propriétés physiques ou leurs propriétés physiques et chimiques.

4. Procédé selon la revendication 3, dans lequel les au moins deux fluides de contre-courant sont distincts dans une ou plusieurs propriétés choisies dans le groupe consistant en le pH, la viscosité et la conductivité.

5. Procédé selon l'une quelconque des revendications 1 à 4, dans lequel une pluralité de fluides de contre-courant ou un seul fluide de contre-courant est introduit(e) à travers la pluralité d'entrées de contre courant (130) à deux ou plusieurs débits d'écoulement linéaires différents.

6. Procédé selon la revendication 5, dans lequel un seul fluide de contre-courant est introduit à travers la pluralité d'entrées de contre courant (130) à deux ou plusieurs débits d'écoulement linéaires différents.

7. Procédé selon la revendication 5, dans lequel le rapport du débit d'écoulement linéaire d'un premier fluide de contre-courant par l'intermédiaire d'une première entrée ou d'un premier groupe d'entrées, sur le débit d'écoulement linéaire d'un deuxième fluide de contre-courant par l'intermédiaire d'une deuxième entrée adjacente ou d'un deuxième groupe adjacent d'entrées est d'environ 5:1 ou moins, dans lequel le premier et le second fluide de contre-courant peuvent être identiques ou différents.

8. Procédé selon l'une quelconque des revendications 5 à 7, dans lequel les débits d'écoulement sont sélectionnés pour fournir une augmentation de la distance entre au moins deux chemins adjacents de parties séparées de l'échantillon.

9. Procédé selon l'une quelconque des revendications 5 à 7, dans lequel les débits d'écoulement sont sélectionnés pour fournir une diminution de la distance entre au moins deux chemins adjacents de parties séparées de l'échantillon.

10. Procédé selon l'une quelconque des revendications 1 à 9, dans lequel le rapport du débit d'écoulement du fluide de contre-courant sur le débit d'écoulement du fluide de séparation est compris entre environ 1:10 et environ 10:1.

11. Procédé selon l'une quelconque des revendications 1 à 10, dans lequel le nombre d'entrées de fluide de séparation est de 1 à 9, le nombre d'entrées de fluide de contre-courant est de 2 à 9, le nombre de sorties de collecte est de 3 à 384 et le nombre d'entrées d'échantillon est de 1 à 5.

12. Procédé selon l'une quelconque des revendications 1 à 11, dans lequel la chambre de séparation comprend en outre des premières et secondes membranes électriquement conductrices (134, 138) adjacentes à la première et à la deuxième électrode, respectivement.

13. Procédé selon l'une quelconque des revendications 1 à 12, dans lequel la pluralité de sorties de collecte est disposée le long d'une ligne perpendiculaire à la direction d'écoulement du fluide de séparation et dans lequel la distance entre des sorties de collecte adjacentes est d'environ 0,1 mm à environ 2 mm.

14. Procédé selon l'une quelconque des revendications 1 à 13, dans lequel la valeur de pH du fluide de contre-courant est supérieure à la valeur de pH du fluide de séparation.

15. Procédé selon l'une quelconque des revendications 1 à 14, dans lequel le fluide ou les fluides de contre-courant contiennent un ou plusieurs composants choisis dans le groupe constitué par l'urée, le glycérol, les glucides et le glucose.

16. Procédé selon l'une quelconque des revendications 1 à 15, dans lequel l'espace de séparation entre la première et la seconde plaque comprend une épaisseur d'environ 0,1 à environ 1,5 mm.

17. Procédé selon l'une quelconque des revendications 1 à 16, comprenant en outre l'étape consistant à réguler la température de la chambre de séparation pour maintenir une température d'environ 2 °C à environ 35 °C.
